(19) **Europäisches Patentamt / European Patent Office / Office européen des brevets**

(11) **EP 3 535 975 B1**

(12) **EUROPEAN PATENT SPECIFICATION**

(45) Date of publication and mention
of the grant of the patent:
**04.11.2020 Bulletin 2020/45**

(21) Application number: **16806057.2**

(22) Date of filing: **02.12.2016**

(51) Int Cl.:
*H04N 19/597* *(2014.01)*   *H04N 19/82* *(2014.01)*
*H04N 19/124* *(2014.01)*   *H04N 19/172* *(2014.01)*
*H04N 19/463* *(2014.01)*

(86) International application number:
**PCT/EP2016/079595**

(87) International publication number:
**WO 2018/099571 (07.06.2018 Gazette 2018/23)**

(54) **APPARATUS AND METHOD FOR 3D VIDEO CODING**

VORRICHTUNG UND VERFAHREN ZUR 3D-VIDEO-CODIERUNG

APPAREIL ET PROCÉDÉ DESTINÉS AU CODAGE VIDÉO EN 3D

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**11.09.2019 Bulletin 2019/37**

(73) Proprietor: **Huawei Technologies Co., Ltd.
Longgang District
Shenzhen, Guangdong 518129 (CN)**

(72) Inventors:
• **ZHAO, Zhijie**
  **80992 Munich (DE)**
• **SCHNEIDER, Jens**
  **52056 Aachen (DE)**
• **SAUER, Johannes**
  **52056 Aachen (DE)**
• **WIEN, Mathias**
  **52074 Aachen (DE)**

(74) Representative: **Pfenning, Meinig & Partner mbB
Patent- und Rechtsanwälte
Joachimsthaler Straße 10-12
10719 Berlin (DE)**

(56) References cited:
**EP-A2- 2 076 048**

• **DE SILVA D V S X ET AL: "Adaptive sharpening of depth maps for 3D-TV", ELECTRONIC LET, THE INSTITUTION OF ENGINEERING AND TECHNOLOGY, vol. 46, no. 23, 11 November 2010 (2010-11-11), pages 1546-1548, XP006037077, ISSN: 1350-911X, DOI: 10.1049/EL:20102320**
• **OH K-J ET AL: "Depth reconstruction filter for depth coding", ELECTRONICS LETTERS, THE INSTITUTION OF ENGINEERING AND TECHNOLOGY, vol. 45, no. 6, 12 March 2009 (2009-03-12) , pages 305-306, XP006032799, ISSN: 1350-911X, DOI: 10.1049/EL:20093182**
• **JAEJOON LEE: "3D-AVC-CE10 summary report on depth in-loop filtering", 99. MPEG MEETING; 6-2-2012 - 10-2-2012; SAN JOSÉ; (MOTION PICTURE EXPERT GROUP OR ISO/IEC JTC1/SC29/WG11), no. m23684, 3 February 2012 (2012-02-03), XP030052209,**
• **TECH GERHARD ET AL: "Overview of the Multiview and 3D Extensions of High Efficiency Video Coding", IEEE TRANSACTIONS ON CIRCUITS AND SYSTEMS FOR VIDEO TECHNOLOGY, INSTITUTE OF ELECTRICAL AND ELECTRONICS ENGINEERS, vol. 26, no. 1, 11 September 2015 (2015-09-11), pages 35-49, XP011592175, ISSN: 1051-8215, DOI: 10.1109/TCSVT.2015.2477935 [retrieved on 2016-01-05]**

EP 3 535 975 B1

**Description**

TECHNICAL FIELD

Generally, the present invention relates to the field of video coding. More specifically, the present invention relates to an apparatus and method for processing 3D video data using inter-view prediction.

BACKGROUND

In 3D video coding multiple sequences of texture frames have to be coded, which feature at least two different views of a scene. The known standard 3D-HEVC only supports block-based view synthesis prediction for coplanar camera arrangements, i.e. views from locations within a single plane. For non-coplanar camera arrangements the assumption that whole blocks move by the same disparity between different views no longer holds. In this case each pixel can shift differently between the views, and therefore conventional view synthesis prediction approaches usually fail. For this purpose, it has been suggested to use pixel-based depth maps directly instead of block vectors derived therefrom.

In current approaches based on depth maps a 3D video sequence provides several views of a scene and comprises texture data in the form of texture frames and depth map data in the form of corresponding depth maps. Generally, the camera parameters, such as the calibration matrix and the relation to a world coordinate system, are known for each view (as well as for each frame, in case these parameters should vary in time). Using 3D warping the different views can be mapped to one another. The mapping is often imperfect, since occlusions are likely to occur in the warped view.

To make an example, say a view named "View 0" shall be warped to the view "View 1". "View 0" is denoted as the reference view and "View 1" is denoted as the target or dependent view. Then, for non-occluded parts the warped view "Warped 0" is a good predictor for "View 1". Consequently the coding performance can be improved by including "Warped 0" into the reference picture list used for the prediction of "View 1". This is applicable for both texture frames and depth maps and is known in the art as inter-view prediction.

The quality of the depth map is very important for the 3D warping of one view to another. Typically the depth map has to be estimated by an algorithm which has only the textures and the camera parameters available. If, for instance, a reference depth map estimated in this way is used for generating a dependent texture or depth map from "View 0" to "View 1", this can lead to an inaccurate view synthesis of "Warped 0". This, in turn, can negatively affect the number of regions, which will be chosen by the encoder to predict "View 1" from "Warped 0" using inter-view prediction.

US 7,558,432 B2 describes an approach for a quantization of depth map data prior to encoding based on histogram analysis. More specifically, US 7,558,432 B2 discloses a method of representing an image or sequence of images using a depth map, including a non-linear transformation of a n-bit depth map representation into a m-bit depth map representation with m < n.

As depth maps are often estimated from texture data or are pre-processed, the corresponding histogram of depth map values might be relatively sparse. A Depth Lookup Table (DLT) was proposed in WO 2014/139566 A1 to exploit the histogram characteristics by only signaling difference indexes of the DLT instead of signaling the residual depth values themselves. By means of this approach the bit depth of these residual values can be reduced, which consequently results in higher coding efficiency for coding of depth maps.

D.V.S.X. De Silva, et al.: "Adaptive sharpening of depth maps for 3D-TV", Electronics Letters, The Institution of Engineering and Technology, vol. 46, no. 23, 11 November 2010 (2010-11-11), pages 1546-1548, discloses depth map enhancement using an edge-preserving smoothing filter.

Although the above conventional approaches provide some improvements, there is still a need for an improved apparatus and method for processing 3D video data using inter-view prediction.

SUMMARY

It is an object of the invention to provide an improved apparatus and method for processing 3D video data using inter-view prediction.

The foregoing and other objects are achieved by the subject matter of the independent claims. Further implementation forms are apparent from the dependent claims, the description and the figures.

Embodiments of the invention are based on the idea of using a configurable depth map value mapping for a preprocessing of depth maps in order to obtain depth maps better suited for view synthesis in inter-view prediction. Typical view synthesis algorithms, for instance, determine homography mappings for each depth value of a depth map, which are then used to generate the synthesized pixels. Embodiments of the invention enable an improved homography mapping, which, in turn, makes it possible to improve the precision of the prediction. Embodiments of the invention provide these advantageous effects without increasing the coding costs of the coded depth maps. Depth maps typically feature many values in a small range, while other ranges are not used. Value mapping of the depth maps in the context of inter-view prediction, as provided by embodiments of the invention, allows focusing on the range portion where the majority of depth map values are located.

Information about the value mapping used by the encoder can be signaled and used at the decoder to modify the values of the depth map for the purpose of inter-view prediction using view synthesis. As an example, a value mapping could restrict the range of the nearest and the farthest value in the depth map to a range where the majority of depth values is found. This is a simple solution which can improve the prediction performance. The reconstructed depth maps are not changed by this process, since only the predictor is modified.

According to a first aspect the invention relates to an apparatus for processing 3D video data using inter-view prediction, wherein the apparatus comprises a processor configured to:

obtain a reconstructed depth information value of a reconstructed depth information video coding block associated to a reference depth information map of a reference view, wherein reconstructed depth information values of the reference depth information map are quantized according to a predetermined reference quantization comprising a predetermined number of quantization levels, each quantization level representing a different depth information value;

obtain a reduced range information associated to the reference depth information map, wherein the reduced range information defines a reduced range of depth quantization levels available for the inter-view prediction within the range of quantization levels defined by the predetermined reference quantization;

process a reconstructed depth information value of the reconstructed depth information video coding block associated to the reference view using a depth information value adaptation function to obtain an adapted reconstructed depth information value (hereinafter also referred to as $D_{adapZ}$ or $Z_{adap}$) of the reconstructed depth information video coding block, wherein the reconstructed depth information value corresponds to the reconstructed depth information value of the reconstructed depth information video coding block or a further processed version thereof, and wherein the distance information value adaptation function is based on the reduced range information and is configured to increase a number of quantization levels available to represent adapted reconstructed depth information values associated to reconstructed depth information values within the reduced range; and

apply a spatial filter to the adapted reconstructed depth information value of the reconstructed depth information video coding block associated to the reference view to obtain a spatially filtered adapted reconstructed depth information value of the reconstructed depth information video coding block associated to the reference view, wherein the spatial filter is an edge preserving smoothing filter; and

generate a predicted texture video coding block of a dependent texture frame associated with a dependent view on the basis of the adapted reconstructed distance information value of the reconstructed depth information video coding block associated to the reference view and a corresponding reconstructed texture video coding block of a reference texture frame associated to the reference view; and

generate a predicted depth information video coding block of a dependent depth information map associated with the dependent view on the basis of the adapted reconstructed depth information value of the reconstructed depth information video coding block associated to the reference view.

Thus, an improved apparatus for processing 3D video data using inter-view prediction is provided.
The video coding blocks could be macro blocks, coding tree units, coding units, prediction units and/or prediction blocks. Each video coding block can comprise a plurality of pixels.
A depth information value can be a depth value or a disparity value. A distance information value can be a distance value, a depth value or a disparity value. Thus, the term "depth map" used herein is to cover any kind of maps or frames providing information about depth or distance of the pixels of the depth map.
On the basis of, for instance, an 8-bit quantization 256 quantization levels can be used, e.g. the quantization levels 0 to 255.
As will be appreciated, according to the first aspect of the invention a predicted texture video coding block and/or a predicted depth information video coding block is generated on the basis of the adapted reconstructed depth information value for the dependent view. As will be further appreciated, the texture video coding block of the dependent texture frame is predicted on the basis of the spatially filtered adapted reconstructed depth information value, whereas the depth information video coding block of the dependent depth information map is predicted on the basis of the adapted reconstructed depth information value (and not the spatially filtered adapted reconstructed depth information value).
By spatially filtering the adapted reconstructed depth information values and predicting the texture video coding block of the dependent texture frame on the basis thereof, it is possible to fill any "gaps" between the adapted reconstructed depth information values and thereby distribute the adapted reconstructed depth information values over the whole reduced range of depth quantization levels resulting in an improved coding efficiency.
In a first possible implementation form of the apparatus according to the first aspect as such, the depth information value adaptation function is implemented such that a number of quantization levels available for representing adapted reconstructed depth information values is larger than or equal to the reduced range of depth quantization levels associated to the reduced range of reconstructed depth information values.

Thus, the resolution of the adapted reconstructed depth information values can be increased resulting in an improved coding efficiency.

In a second possible implementation form of the apparatus according to the first aspect as such or the first implementation form thereof, the depth information value adaptation function is implemented such that a number of quantization levels QL of depth information values is predetermined and the depth information value adaptation function corresponds to the following equation:

$$D_{adapZ} = \frac{D - l_l}{l_u - l_l} \cdot (QL - 1),$$

wherein D denotes the reconstructed depth information value of the reconstructed depth information block associated to the reference view, $D_{adapZ}$ denotes the adapted reconstructed depth information value, $l_l$ denotes a lower depth information value representing a lower limit of the reduced range, $l_u$ denotes an upper depth information value representing an upper limit of the reduced range.

Using a linear distance information value adaptation function allows a fast determination of the adapted reconstructed depth information value.

In a third possible implementation form of the apparatus according to the first aspect as such or any one of the preceding implementation forms thereof, the processor is further configured to determine the reduced range information, e.g. a lower depth information value representing a lower limit of the reduced range and an upper depth information value representing an upper limit of the reduced range, associated to the reference view by performing an outlier detection among occurring reconstructed depth information values occurring in a reconstructed version of the depth information map associated to the reference view.

Thus, the resolution of the adapted reconstructed depth information values can be increased resulting in an improved coding efficiency, without requiring any additional memory resources as well as losing any essential information contained in the original depth map.

In a fourth possible implementation form of the apparatus according to the third implementation form of the first aspect, the processor is configured to determine the reduced range information such that the lower depth information value is larger than a minimum depth information value occurring in the reconstructed version of the depth information map and/or the upper depth information value is smaller than a maximum depth information value occurring in the reconstructed version of the depth information map.

Thus, the resolution of the adapted reconstructed depth information values can be increased resulting in an improved coding efficiency, without requiring any additional memory resources as well as losing any essential information contained in the original depth map.

In a fifth possible implementation form of the apparatus according to the third or fourth implementation form of the first aspect, the processor is further configured to determine a histogram about an occurrence of reconstructed depth information values in the reconstructed version of the depth information map associated to the reference view to perform the outlier detection.

Using a histogram about the occurrence of reconstructed depth information values in the reconstructed version of the depth information map associated to the reference view allows detecting any outliers fast and efficiently.

In a sixth possible implementation form of the apparatus according to the first aspect as such or any one of the preceding implementation forms thereof, the processor is further configured to obtain a nearest depth value corresponding to a minimum depth information value and a depth distance value corresponding to a maximum depth information value according to the pre-determined reference quantization, wherein the depth information value adaptation function is further based on the nearest depth value and the farthest depth value for providing an adapted nearest depth value and an adapted farthest depth value.

In a eighth possible implementation form of the apparatus according to the first aspect as such or any one of the preceding implementation forms thereof, the apparatus for processing 3D video data using inter-view prediction is an apparatus for decoding 3D video data using inter-view prediction.

In an ninth possible implementation form of the apparatus according to the eighth implementation form of the first aspect, the processor is configured to obtain encoding side information, wherein the encoding side information comprises information about at least one parameter associated with the processing of the reconstructed depth information value of the reconstructed depth information video coding block associated to the reference view using the depth information value adaptation function to obtain the adapted reconstructed depth information value of the reconstructed depth information video coding block. In an implementation form the encoding side information can comprise, for instance, the lower and the upper limit of the reduced range, i.e. the lower depth information value and the upper depth information value. In this case these values do not need to be determined once more for decoding. Alternatively or additionally, the encoding side information can comprise a flag indicating whether depth value mapping is to be used for decoding or not.

In a tenth possible implementation form of the apparatus according to the first aspect as such or any one of the first to sixth implementation form thereof, the apparatus for processing 3D video data using inter-view prediction is an apparatus for encoding 3D video data using inter-view prediction.

In a eleventh possible implementation form of the apparatus according to the tenth implementation form of the first aspect, the processor is further configured to generate encoding side information, wherein the encoding side information comprises at least one parameter associated with the processing of the reconstructed depth information value of the reconstructed depth information video coding block associated to the reference view using the depth information value adaptation function to obtain the adapted reconstructed depth information value of the reconstructed depth information video coding block. In an implementation form the encoding side information can comprise, for instance, the lower and the upper limit of the reduced range, i.e. the lower depth information value and the upper depth information value. In this case these values do not need to be determined once more for decoding. Alternatively or additionally, the encoding side information can comprise a flag indicating whether depth value mapping is to be used for decoding or not.

According to a second aspect the invention relates to a corresponding method for processing 3D video data using inter-view prediction. The method comprises:

obtaining a reconstructed depth information value of a reconstructed depth information video coding block associated to a reference depth information map of a reference view, wherein reconstructed depth information values of the reference depth information map are quantized according to a predetermined reference quantization comprising a predetermined number of quantization levels, each quantization level representing a different depth information value;

obtaining a reduced range information associated to the reference depth information map, wherein the reduced range information defines a reduced range of depth quantization levels available for the inter-view prediction within the range of quantization levels defined by the predetermined reference quantization;

processing a reconstructed depth information value of the reconstructed depth information video coding block associated to the reference view using a depth information value adaptation function to obtain an adapted reconstructed depth information value of the reconstructed depth information video coding block, wherein the reconstructed depth information value corresponds to the reconstructed depth information value of the reconstructed depth information video coding block or a further processed version thereof, and wherein the depth information value adaptation function is based on the reduced range information and is configured to increase a number of quantization levels available to represent adapted reconstructed depth information values associated to reconstructed depth information values within the reduced range; and

applying a spatial filter to the adapted reconstructed depth information value of the reconstructed depth information video coding block associated to the reference view to obtain a spatially filtered adapted reconstructed depth information value of the reconstructed depth information video coding block associated to the reference view, wherein the spatial filter is an edge preserving smoothing filter; and

generating a predicted texture video coding block of a dependent texture frame associated with a dependent view on the basis of the adapted reconstructed distance information value of the reconstructed depth information video coding block associated to the reference view and a corresponding reconstructed texture video coding block of a reference texture frame associated to the reference view; and

generating a predicted depth information video coding block of a dependent depth information map associated with the dependent view on the basis of the adapted reconstructed depth information value of the reconstructed depth information video coding block associated to the reference view.

Thus, an improved method for processing 3D video data using inter-view prediction is provided.

According to a third aspect the invention relates to a computer program comprising program code for performing the method according to the second aspect when executed on a computer.

The invention can be implemented in hardware and/or software.

BRIEF DESCRIPTION OF THE DRAWINGS

Further embodiments of the invention will be described with respect to the following figures, wherein:

Fig. 1 shows a schematic diagram illustrating a reference layer and a dependent layer of an encoding apparatus for processing 3D video data according to an embodiment;

Fig. 2 shows a schematic diagram illustrating a reference layer and a dependent layer of a decoding apparatus for processing 3D video data according to an embodiment;

Fig. 3 shows a schematic diagram illustrating a method for processing 3D video data according to an embodiment;

Fig. 4 shows a histogram of depth map values of an original depth map for processing by an encoding apparatus or a decoding apparatus for processing 3D video data according to an embodiment;

Fig. 5 shows a processed version of the histogram of depth map values of figure 4 provided by an encoding apparatus or a decoding apparatus for processing 3D video data according to an embodiment;

Fig. 6 shows a further processed version of the histogram of depth map values of figures 4 and 5 provided by an encoding apparatus or a decoding apparatus for processing 3D video data according to an embodiment;

Fig. 7 shows a filtered version of the histogram of depth map values of figure 4, which have not been processed by an encoding apparatus or a decoding apparatus for processing 3D video data according to an embodiment; and

Fig. 8 shows a table providing exemplary results of the performance of an encoding apparatus and a decoding apparatus for processing 3D video data according to an embodiment.

In the various figures, identical reference signs will be used for identical or at least functionally equivalent features.

DETAILED DESCRIPTION OF EMBODIMENTS

In the following description, reference is made to the accompanying drawings, which form part of the disclosure, and in which are shown, by way of illustration, specific aspects in which the present invention may be placed. It is understood that other aspects may be utilized and structural or logical changes may be made without departing from the scope of the present invention. The following detailed description, therefore, is not to be taken in a limiting sense, as the scope of the present invention is defined be the appended claims.

For instance, it is understood that a disclosure in connection with a described method may also hold true for a corresponding device or system configured to perform the method and vice versa. For example, if a specific method step is described, a corresponding device may include a unit to perform the described method step, even if such unit is not explicitly described or illustrated in the figures. Further, it is understood that the features of the various exemplary aspects described herein may be combined with each other, unless specifically noted otherwise.

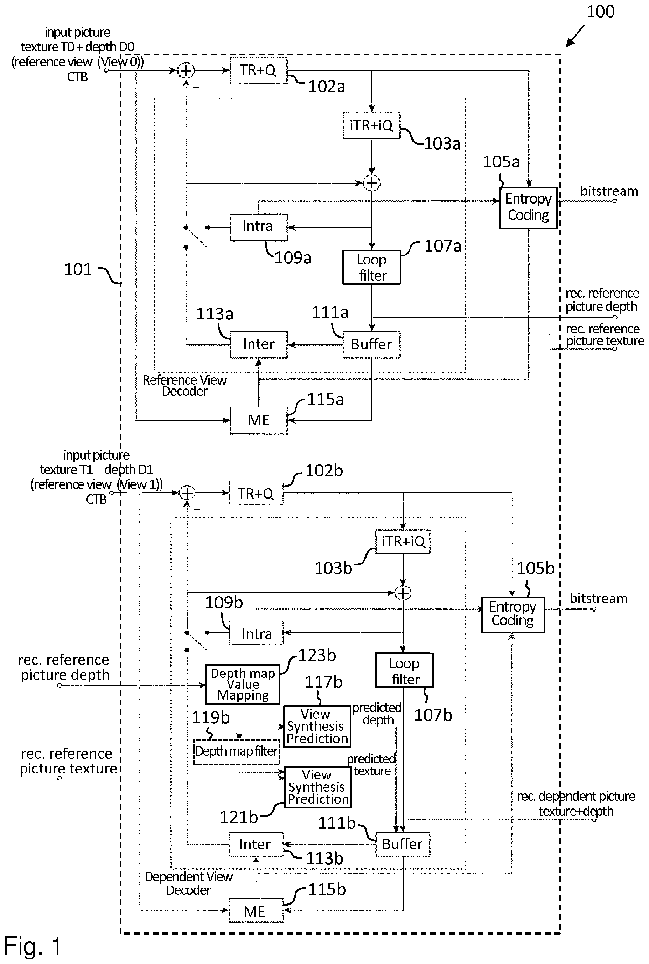

Figure 1 shows a schematic diagram illustrating a reference layer (upper half of figure 1) and a dependent layer (lower half of figure 1) implemented by a processor 101 of an apparatus 100 for encoding 3D video data according to an embodiment. The apparatus 100 is configured to encode 3D video data comprising a plurality of texture frames and a plurality of associated depth maps, wherein each texture frame and each depth map can be partitioned into a plurality of video coding blocks. In an embodiment, the encoding apparatus 100 can further comprise a communication interface for receiving and transmitting 3D video data. The video coding blocks could be, for instance, macro blocks, coding tree units, coding units, prediction units and/or prediction blocks. Each video coding block can comprise a plurality of pixels. Each depth map can define for the plurality of pixels a depth value, a distance value or a disparity value. The encoding apparatus 100 shown in figure 1 will be described in more detail further below.

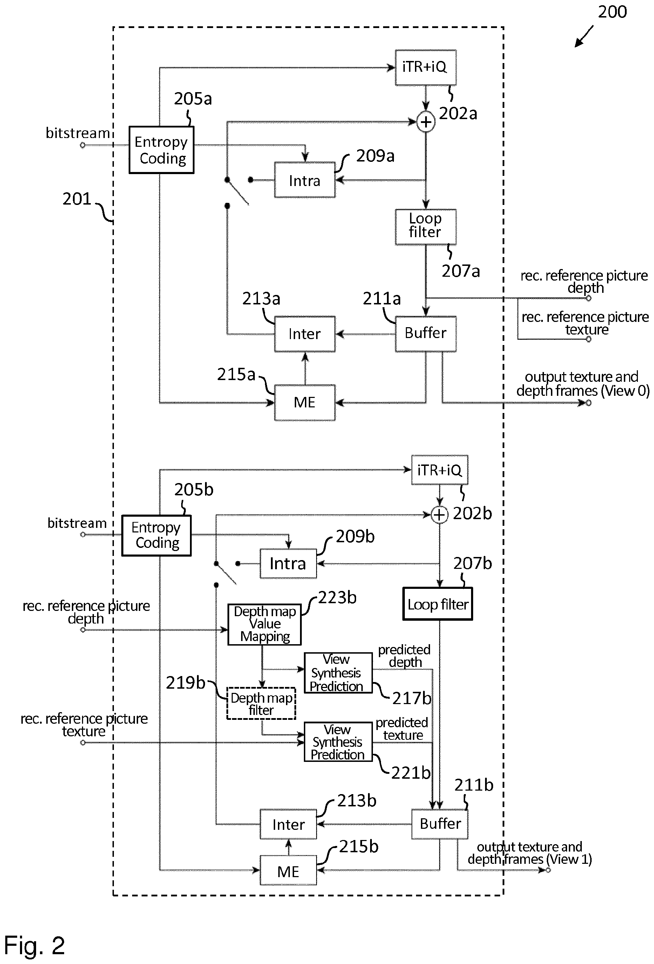

Figure 2 shows a schematic diagram illustrating a reference layer (upper half of figure 2) and a dependent layer (lower half of figure 2) implemented by a processor 201 of a corresponding apparatus 200 for decoding 3D video data according to an embodiment, for instance, 3D video data provided in the form of a bitstream by the encoding apparatus 100. The apparatus 200 is configured to decode 3D video data comprising a plurality of texture frames and a plurality of associated depth maps, wherein each texture frame and each depth map can be partitioned into a plurality of video coding blocks. In an embodiment, the decoding apparatus 200 can further comprise a communication interface for receiving and transmitting 3D video data.

The embodiments of figures 1 and 2 show an exemplary setup based on two views, namely a reference view or "View 0" and a dependent view or "View 1", wherein each view is associated with a (temporal) sequence of texture frames and corresponding depth maps. The person skilled in the art will readily appreciate how to extend the embodiments shown in figures 1 and 2 to more than two views. Very generally both texture and depth map are used for a view synthesis prediction of the dependent view "View 1" on the basis of the reference view "View 0". In other words, output from the reference layer is used for processing in the dependent layer. A configurable value mapping based on a distance information value adaptation function is applied to a depth map before it is used for view synthesis prediction. The mapping operation can be implemented identically in the encoding apparatus 100 and the decoding apparatus 200. The parameters of the mapping can be sequence, frame or slice dependent and can either be partially or completely determined by the decoding apparatus 200 (as well as the encoding apparatus 100) or signaled to the decoding apparatus 200 by the encoding apparatus 100 on the basis of encoding side information. Different signaling schemes can be implemented in embodiments of the invention, such as signaling of the value mapping used by the encoding apparatus by means of encoding side information, including a lookup table, a piece-wise linear or higher order functional and/or the definition of a depth clipping range (i.e. a lower and/or upper limit of a range of depth map values). Alternatively or additionally, a flag can be signaled indicating whether depth value mapping is to be used or not.

More specifically, the processor 101 of the encoding apparatus 100 and the processor 201 of the decoding apparatus 200 are configured to:

obtain a reconstructed depth information value, e.g. a depth value or a disparity value, of a reconstructed depth information video coding block associated to a reference depth information map (referred to as depth DO in figure 1) of a reference view (referred to as View 0 in figures 1 and 2), wherein reconstructed depth information values of the reference depth information map are quantized according to a predetermined reference quantization comprising a predetermined number of quantization levels, for instance the quantization levels 0 to 255 for a 8 bit quantization, each quantization level representing a different depth information value;

obtain a reduced range information associated to the reference depth information map, wherein the reduced range information defines a reduced range of depth quantization levels available for the inter-view prediction within the range of quantization levels defined by the predetermined reference quantization;

process a reconstructed distance information value, e.g. a depth value, a disparity value or a distance value, of the reconstructed depth information video coding block associated to the reference view using a distance information value adaptation function to obtain an adapted reconstructed distance information value of the reconstructed depth information video coding block, wherein the reconstructed distance information value corresponds to the reconstructed depth information value of the reconstructed depth information video coding block or a further processed version thereof, and wherein the distance information value adaptation function is based on the reduced range information and is configured to increase a number of quantization levels available to represent adapted reconstructed distance information values associated to reconstructed depth information values within the reduced range; and

generate a predicted texture video coding block of a dependent texture frame (referred to as texture T1 in figure 1) associated with a dependent view (referred to as View 1 in figures 1 and 2) on the basis of the adapted reconstructed distance information value of the reconstructed depth information video coding block associated to the reference view and a corresponding reconstructed texture video coding block of a reference texture frame (referred to as texture TO in figure 1) associated to the reference view; and/or

generate a predicted depth information video coding block of a dependent depth information map (referred to as depth D1 in figure 1) associated with the dependent view on the basis of the adapted reconstructed distance information value of the reconstructed depth information video coding block associated to the reference view.

For providing the functionality described above the processor 101 of the encoding apparatus 100 and the processor 201 of the decoding apparatus 200 can comprise the functional blocks shown in figures 1 and 2, in particular the functional blocks 123b and 223b providing the depth map value mapping as well as the blocks 117b, 121b as well as 217b, 221b providing a view synthesis prediction for the inter-view prediction. These functional blocks can be implemented in software. In other embodiments, at least some of these functional blocks can be provided by dedicated hardware units.

Further components of the encoding apparatus 100 as well as the operation of the encoding apparatus 100 will be described in the following. Both texture and depth map frames associated with the reference view are split into non-overlapping video coding blocks. For each video coding block the predicted video coding block is subtracted. Then the video coding block is transformed, quantized and entropy encoded (see functional blocks 102a and 105a in figure 1). The encoded video coding blocks are provided to a functional block 103a, which performs a reverse transformation and quantization (indicated as "iTR+iQ" in figure 1). This processing step can result in a quantization error. The reconstructed video coding block is made available for intra prediction of other video coding blocks in the same frame (see functional block 109a in figure 1). Moreover, the video coding block can be processed by a loop filter 107a and stored in a reference picture buffer 111a. Thus, the video coding block is also available for inter prediction of other frames (see functional block 113a of figure 1). The inter prediction can be based on a motion estimation (see functional block 115a of figure 1). In an embodiment, a control unit or module can select the video coding block and the mode (intra/inter), which is used as predictor for a particular video coding block. This information is generally also needed by the decoder 200 and hence also entropy coded by the entropy encoder 105a. The reconstructed texture and depth map frames are made available to the dependent layer portion of the apparatus 100, which is shown in the lower half of figure 1 and will be described in the following.

As several of the functional blocks of the dependent layer portion of the apparatus 100 can be identical to the corresponding functional blocks of the reference layer portion of the apparatus 100, only the differences between these two portions will be explained in more detail. In addition to the texture and depth map frames, which are also available in the reference layer portion of the apparatus 100, the dependent layer portion of the apparatus 100 shown in the lower half of figure 1 also has the reconstructed texture and depth map frames of the reference layer as input. The reconstructed depth map of the reference texture frame is remapped (as described above) using the depth map value mapping unit 123b and processed using the view synthesis prediction unit 117b in order to create a predictor for the depth map of the dependent view. This predictor is added to a reference picture buffer 111b. Further the reconstructed depth map of the reference texture frame can be filtered by means of a depth map filter 119b, which will be described in more detail further below, and processed using the view synthesis prediction unit 121b in order to create a predictor of the dependent texture frame. This predictor is added to the reference picture buffer 111b as well.

Further components of the decoding apparatus 200 as well as the operation of the decoding apparatus 200 will be described in the following. Both texture frames and depth map frames of the reference view are split into non-overlapping video coding blocks. The residual of a video coding block for both the texture frames and depth maps of the reference view is read from the entropy coding unit 205a together with the corresponding parameters for inter and intra prediction. The residual is added to the obtained predictor. Then reverse transform and quantization of the video coding block are computed in order to reconstruct the video coding block (see functional block 202a of figure 2). The reconstructed video coding block is made available for intra prediction of other blocks in the same frame (see functional block 209a of figure 2). Further the video coding block can be processed by a loop filter 207a and stored in a reference picture buffer 211a. The video coding block is then also available for inter prediction of other frames (see functional block 213a of figure 2). The inter prediction can be based on a motion compensated prediction (see functional block 215a of figure 2). Frames (i.e. texture frames and depth maps) can be outputted in output order from the buffer 211a.

As several of the functional blocks of the dependent layer portion of the decoding apparatus 200 can be identical to the corresponding functional blocks of the reference layer portion of the decoding apparatus 200, only the differences between these two portions will be explained in more detail. In addition to the texture and depth map frames, which are also available in the reference layer portion of the decoding apparatus 200, the dependent layer portion of the decoding apparatus 200 also has the reconstructed texture frames and depth map frames of the reference view as input available.

The reconstructed depth map of the reference texture frame is remapped (as described above) using the depth map value mapping unit 223b and processed using the view synthesis prediction unit 217b in order to create a predictor for the depth map of the dependent view. This predictor is added to a reference picture buffer 211b. Moreover, the reconstructed depth map of the reference texture frame can be filtered by means of a depth map filter 219b, which will be described in more detail further below, and processed by the view synthesis prediction unit 221b in order to create a predictor of the dependent texture frame. This predictor is added to the reference picture buffer 211b.

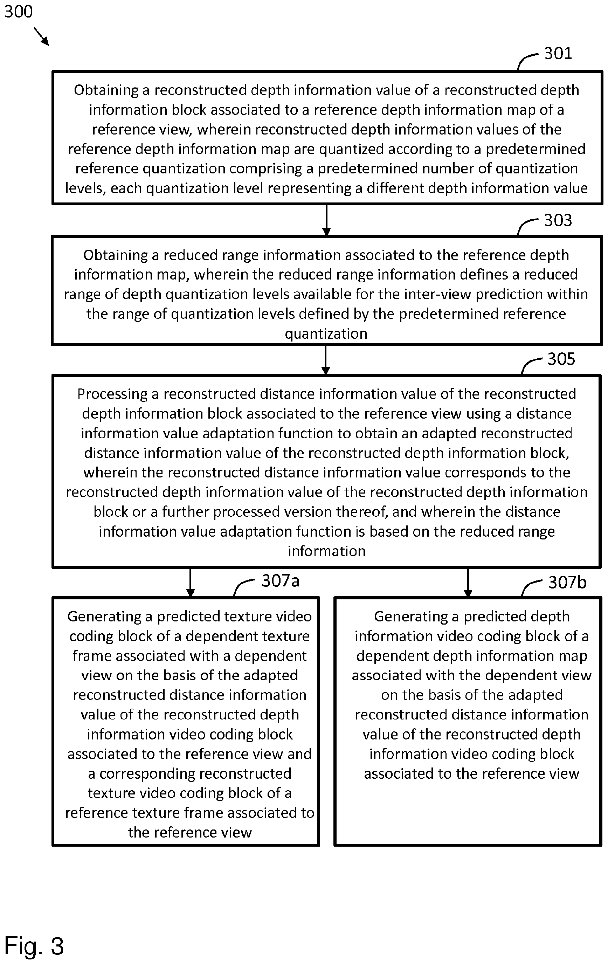

Figure 3 shows a schematic diagram illustrating a corresponding method 300 of processing, in particular encoding or decoding, 3D video data using inter-view prediction.

The method 300 comprises a step 301 of obtaining a reconstructed depth information value of a reconstructed depth information video coding block associated to a reference depth information map of a reference view, wherein reconstructed depth information values of the reference depth information map are quantized according to a predetermined reference quantization comprising a predetermined number of quantization levels, each quantization level representing a different depth information value.

The method 300 comprises a step 303 of obtaining a reduced range information associated to the reference depth information map, wherein the reduced range information defines a reduced range of depth quantization levels available for the inter-view prediction within the range of quantization levels defined by the predetermined reference quantization.

The method 300 comprises a step 305 of processing a reconstructed distance information value of the reconstructed depth information video coding block associated to the reference view using a distance information value adaptation function to obtain an adapted reconstructed distance information value of the reconstructed depth information video coding block, wherein the reconstructed distance information value corresponds to the reconstructed depth information value of the reconstructed depth information video coding block or a further processed version thereof, and wherein the distance information value adaptation function is based on the reduced range information.

Moreover, the method 300 comprises a step 307a of generating a predicted texture video coding block of a dependent texture frame associated with a dependent view on the basis of the adapted reconstructed distance information value of the reconstructed depth information video coding block associated to the reference view and a corresponding reconstructed texture video coding block of a reference texture frame associated to the reference view. Alternatively or additionally, the method 300 comprises a step 307b of generating a predicted depth information video coding block of a dependent depth information map associated with the dependent view on the basis of the adapted reconstructed distance information value of the reconstructed depth information video coding block associated to the reference view.

As will be appreciated, the above steps of the method 300 do not necessarily have to be performed in the sequence shown in figure 3. Other sequences are possible as well.

Further embodiments, of the encoding apparatus 100, the decoding apparatus 200 and the method 300 will be described in the following, wherein it will be appreciated that further embodiments described in the context of the encoding apparatus 100 and/or the decoding apparatus 200 apply to the method 300 as well, unless explicitly stated to the contrary.

In an embodiment, the distance information value adaptation function is implemented such that a number of quantization levels available for representing adapted reconstructed distance information values is larger than or equal to the reduced range of depth quantization levels associated to the reduced range of reconstructed depth information values.

In an embodiment, the distance information adaptation function is implemented such that a number of quantization levels available for representing adapted reconstructed distance information values is predetermined, for example equal to a number of quantization levels of the pre-determined reference quantization, or larger than the number of quantization levels of the predetermined reference quantization. In an implementation form, the quantization levels of the pre-determined reference quantization can be based, for instance, on an 8 bit quantization and the quantization levels available for representing adapted reconstructed distance information values can be based, for instance, on an 8, 10 or 12 bit quantization.

In an embodiment, the processor 101 and/or the processor 201 is further configured to determine the reduced range information, e.g. a lower depth information value representing a lower limit of the reduced range and an upper depth information value representing an upper limit of the reduced range, associated to the reference view by performing an outlier detection among occurring reconstructed depth information values occurring in a reconstructed version of the depth information map associated to the reference view.

In an embodiment, the processor 101 and/or the processor 201 is configured to determine the reduced range information such that the lower depth information value is larger than a minimum depth information value occurring in the reconstructed version of the depth information map and/or the upper depth information value is smaller than a maximum depth information value occurring in the reconstructed version of the depth information map. As already described above, the lower and upper depth information value can be provided by the encoding apparatus 100 as part of the encoding side information to the decoding apparatus 200 so that these values do not have to be determined by the decoding apparatus 200 once more.

In an embodiment, the processor 101 and/or the processor 201 is further configured to determine a histogram about an occurrence of reconstructed depth information values in the reconstructed version of the depth information map associated to the reference view to perform the outlier detection, as will be described in more detail further below.

In an embodiment, the processor 101 of the encoding apparatus 100 is further configured to generate encoding side information, wherein the encoding side information comprises information about at least one parameter associated with the processing of the reconstructed distance information value of the reconstructed depth information video coding block associated to the reference view using the distance information value adaptation function to obtain the adapted reconstructed distance information value of the reconstructed depth information video coding block. As already mentioned above, the encoding side information can comprise, for instance, the lower and the upper limit of the reduced range, i.e. the lower depth information value and the upper depth information value. Alternatively or additionally, the encoding side information can comprise a flag indicating whether depth value mapping is to be used or not.

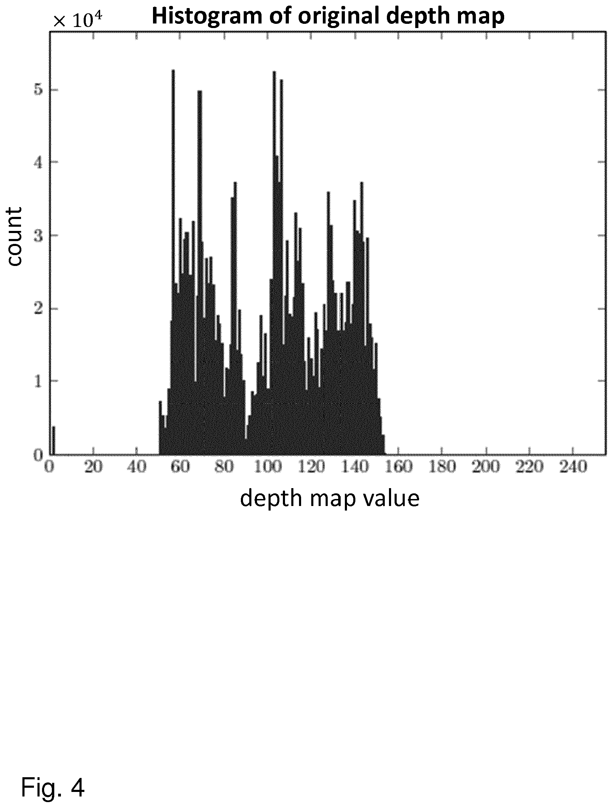

In an embodiment, the value mapping (also referred to as value remapping) provided, for instance, by the depth map value mapping functional blocks 123b and 223b of figures 1 and 2 can be implemented in the following way. In a first stage, a histogram of the depth map is computed, such as the exemplary histogram shown in figure 4.

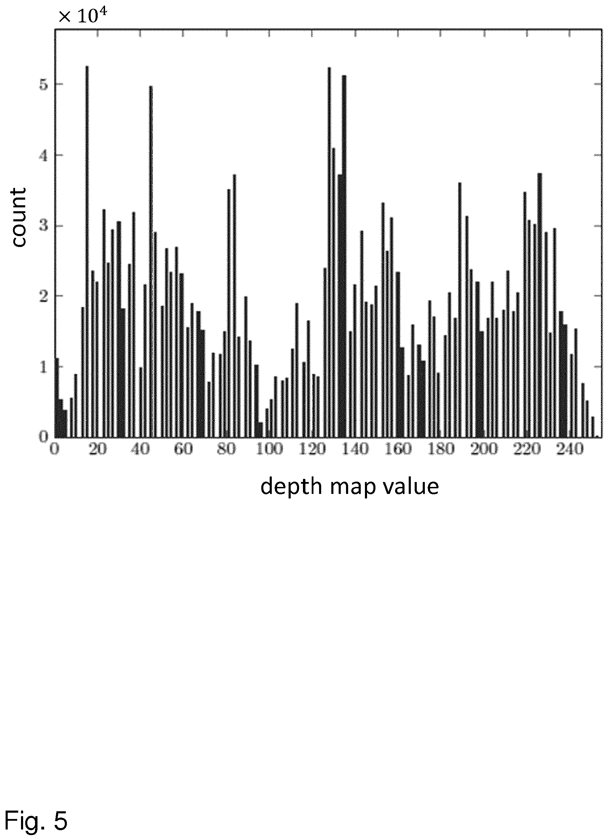

In a further stage, the range of depth map values (i.e. depth information values) can be determined, which comprises the majority of depth map values, for instance, 90% of the depth map values, defining a lower limit $l_l$ and an upper limit $l_u$ and thereby a reduced range. In an embodiment, $l_l$ and $l_u$ could be determined by removing the or a given number smallest outlier and/or the or a given number of largest outlier value(s) in the original histogram of the depth map (as already mentioned above, $l_l$ and $l_u$ can be provided as part of the encoding side information to the decoding apparatus 200). The range between $l_l$ and $l_u$ can then be remapped to a full 8 bit range of the predetermined reference quantization providing, for instance, the exemplary processed histogram of depth map values shown in figure 5.

In an embodiment, the remapping described above, i.e. the distance information value adaptation function, can be based on the following equation:

$$D_{adapZ} = \frac{D - l_l}{(l_u - l_l)} \times 255,$$

where $l_l$ denotes the lower limit of the used dynamic range and $l_u$ is the upper limit of the used dynamic range, respectively.

In order to determine the actual distance from the camera a transformation can be applied to the depth map for which the closest and farthest distance from the camera ($Z_{near}, Z_{far}$) have to be known, wherein the transformation is based, for instance, on the following distance information value adaptation function:

$$Z = \frac{1}{\frac{D}{255}\left(\frac{1}{Z_{near}} - \frac{1}{Z_{far}}\right) + \frac{1}{Z_{far}}}.$$

Since the range of the depth map is modified, the parameters $Z_{near}$ and $Z_{far}$ can be adapted accordingly. The new values ($Z_{near}^{adap}$, $Z_{far}^{adap}$), for the closest and farthest values in the depth map ($Z_{near}, Z_{far}$) are determined. $Z_{near}$ and $Z_{far}$ correspond to the closest and farthest values (distance from the camera) in the unchanged reference depth map. $Z_{near}^{adap}$ and $Z_{far}^{adap}$ correspond to the closest and farthest values (distance from the camera) in the modified depth map. In an embodiment, the values of the adapted $Z_{near}$ and $Z_{far}$ can be obtained on the basis of the following two equations:

$$Z_{near}^{adap} = \frac{1}{\frac{l_u}{255}\left(\frac{1}{Z_{near}} - \frac{1}{Z_{far}}\right) + \frac{1}{Z_{far}}},$$

and

$$Z_{far}^{adap} = \frac{1}{\frac{l_l}{255}\left(\frac{1}{Z_{near}} - \frac{1}{Z_{far}}\right) + \frac{1}{Z_{far}}}.$$

The modified depth map can then be used together with the adapted values of $Z_{near}$ and $Z_{far}$ for the view synthesis prediction, as implemented, for instance, in the functional blocks 117b, 121b and 217b, 221b of figures 1 and 2, respectively.

The following further embodiment provides a more extensive implementation of the value mapping as implemented, for instance, in the functional block 123b and 223b of figures 1 and 2, respectively. In this embodiment, the original histogram, e.g. the exemplary histogram shown in figure 4, is split into $n$ depth map value ranges, which together comprise the majority of depth map values. The lower and upper limits of these respective depth map value ranges are $l_{l1}$ to $l_{ln}$ and $l_{u1}$ to $l_{un}$. The range between $l_{lx}$ and $l_{ux}$ ($x$ between 1 and $n$) can then be remapped to the full 8 bit range. The remapping for each range is done using the same equations (i.e. distance information value adaptation functions) as for a single range, replacing the respective values for $l_l$ and $l_u$.

In the embodiments described so far a linear transformation of the depth map values (D to $D_{adapZ}$) has been used in each range. In a further embodiment, nonlinear transformations of the different ranges can be used for the value remapping.

As already mentioned above, in the histogram of the original depth map shown in figure 4 the dynamic range provided by the 8 bit quantization levels is covered only partially. A better coverage of the dynamic range can be obtained by the embodiments described above, as exemplified by the histogram of processed depth map values shown in figure 5.

As can be taken from figure 5, the exemplary histogram of processed depth map values shown therein comprises several "gaps", i.e. depth map values within the dynamic range, which are associated with no or very few pixels of the depth map. According to a further embodiment, these gaps can be handled by means of an additional spatial filtering of the depth map, as implemented, for instance, in the functional blocks 119b and 219b of figures 1 and 2, respectively.

As will be appreciated form figures 1 and 2, in an embodiment including an additional spatial filtering of the depth map the texture video coding block of the dependent texture frame is predicted on the basis of the spatially filtered adapted reconstructed depth information value, whereas the depth information video coding block of the dependent depth information map is predicted on the basis of the adapted reconstructed depth information value (and not the spatially filtered adapted reconstructed depth information value). Although in the embodiments shown in figures 1 and 2 the spatial filtering (i.e. functional blocks 119b, 219b) occurs after the depth map value mapping (i.e. functional blocks 123b, 223b), this order can be reserved in alternative embodiments. In other words, in an embodiment, the spatial filtering of the reconstructed depth map can occur before the depth map value mapping.

In an embodiment, an edge preserving smoothing filter can be used for a spatial filtering of the depth map. In an embodiment, the filter suggested in the paper Kaiming He, Jian Sun and Xiaoou Tang, "Guided Image Filtering", in Pattern Analysis and Machine Intelligence, IEEE Trans. on 35.6, June 2013, Pages 1397-1409, can be applied on the depth map for spatial filtering. It is similar to a bilateral filter, but can be implemented more efficiently and achieves a smoothing of the depth map while preserving sharp edges.

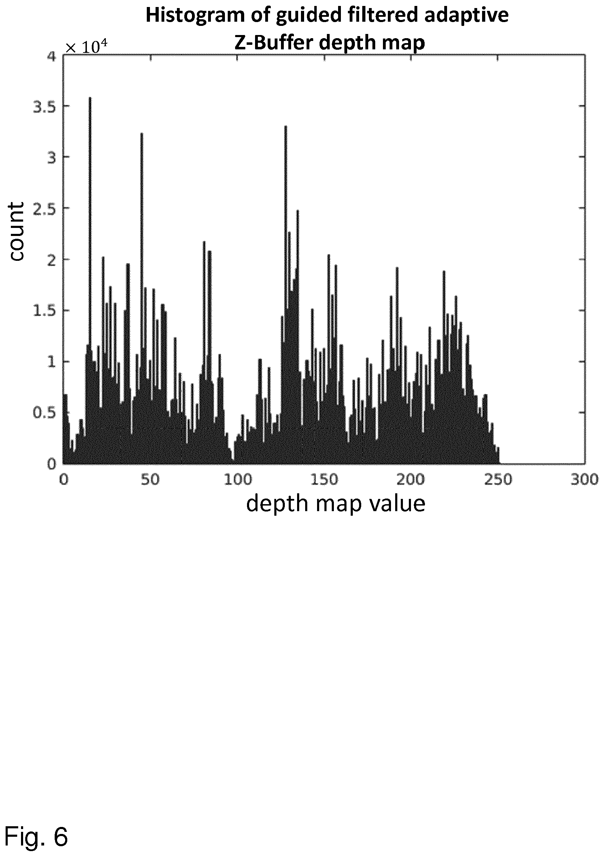

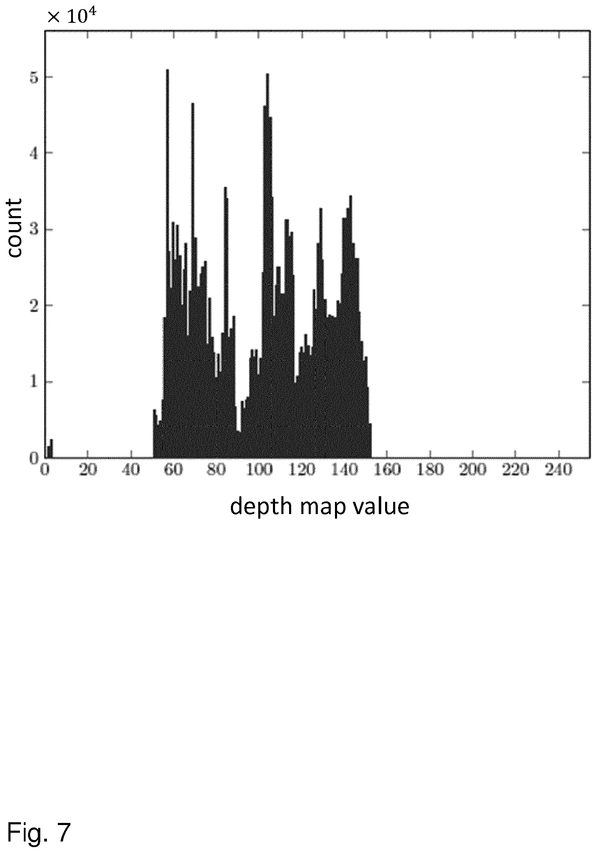

As can be taken from figure 6, which shows the exemplary histogram of figure 4 after the value remapping and spatial filtering described above, embodiments of the invention can increase the precision of the output of the filter, as there are more values of the dynamic range available. Note that generally this behavior is not achievable by the filter process alone, because only applying the filter directly on the original reference depth map shown in figure 4 cannot increase the precision of the depth map. Figure 7 shows the result of applying filtering to the original reference depth map.

In the following further examples for the embodiments described above will be provided. Choosing, for instance, $l_l = 50$ and $l_u = 154$ for the original histogram of depth map values shown in figure 4 leads to:

$$D_{adapZ} = (D - 50)\frac{255}{104}.$$

Thus, the former minimum and maximum values $D_{min} = 50$, $D_{max} = 154$ become $D_{min}^{adap} = 0$,

$D_{max}^{adap} = 255.$ The original values $Z_{near}$ = 15 and $Z_{far}$ = 100 for this sequence become $Z_{near}^{adap} = 22.61$ and $Z_{far}^{adap} = 47.37.$ Picking some value $D$ = 100 inside the remapped range it can be seen, that the absolute distance to which it corresponds will stay the same, except for errors due to rounding, $D_{adap}$ = 123, i.e.:

$$Z = \frac{1}{\frac{D}{255}\left(\frac{1}{Z_{near}} - \frac{1}{Z_{far}}\right) + \frac{1}{Z_{far}}} = 31.03,$$

and

$$Z^{adap} = \frac{1}{\frac{D^{adap}}{255}\left(\frac{1}{Z_{near}^{adap}} - \frac{1}{Z_{far}^{adap}}\right) + \frac{1}{Z_{far}^{adap}}} = 30.99.$$

This is further illustrated by the following example. The vector of values
$v$ = (20 20 21 22 23 23 23 28 30 30)
is filtered with the smoothing filter:

$$f = (1\ 2\ 1)/4.$$

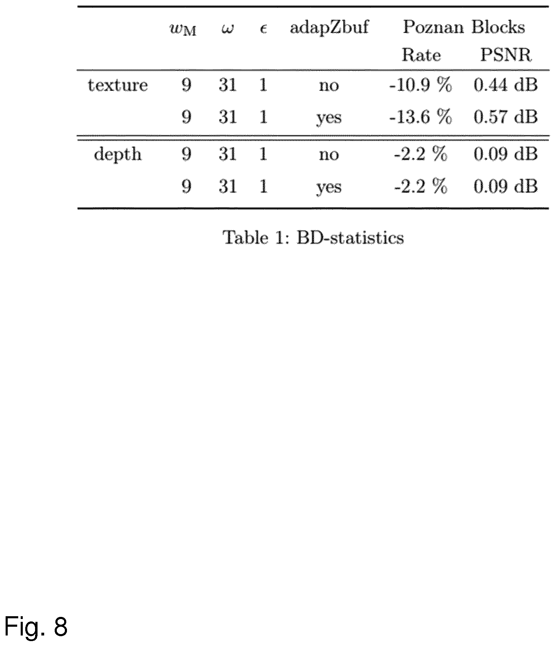

Without value remapping the result is (due to the integer representation):
$v_{filt}$ = (15 20 21 22 23 23 24 27 30 23),
which has 8 distinct levels. With the value remapping $v$ becomes:
$v_{remapped}$ = (0 0 26 51 77 77 77 204 255 255).
Here, the filtered vector is
$v_{filt,remapped}$ = (0 7 26 51 71 77 109 185 242 191),
which has 10 distinct levels.
Embodiments of the invention can be configured to process multiple reference views for an improved prediction of the texture and depth map of the target view by including multiple warped reference views into the reference picture list of the target view.
Embodiments of the invention have been tested in combination with the method of image guided depth map filtering, inpainting for occluded areas and a median filter of size $\omega_M$ = 9 using the MPEG view synthesis reference software (VSRS). The coding scenario was two view All-Intra. As test sequence the Poznan Blocks sequence was used. The parameters for the image guided filter were chosen to be as follows: filter size $\omega$ = 31, degree of smoothing $\varepsilon$ = 1. The filtering was applied to distance values and not to the "original reference depth map". However, as already described above, the filtering could be applied to the depth map directly as well with different parameters for the filtering. Applying the filter on the distance has the effect that the filtering is done on the linear representation of the depth, instead of the nonlinear representation of the depth map. The reference for the BD-statistics was chosen to be the coding performance of 3D HEVC. As can be seen from Table 1 shown in figure 8, processing the depth data by embodiments of the invention, which are herein referred to as adaptive Z-Buffering ("adapZbuf"), increases the rate savings for the dependent texture by 2.7% with respect to view synthesis prediction (VSP) with the original reference depth map. For the tested sequence and configuration the coding efficiency for the dependent depth map does not change with the use of embodiments of the invention.
While a particular feature or aspect of the disclosure may have been disclosed with respect to only one of several implementations or embodiments, such a feature or aspect may be combined with one or more further features or aspects of the other implementations or embodiments as may be desired or advantageous for any given or particular application. Furthermore, to the extent that the terms "include", "have", "with", or other variants thereof are used in either the detailed description or the claims, such terms are intended to be inclusive in a manner similar to the term "comprise". Also, the terms "exemplary", "for example" and "e.g." are merely meant as an example, rather than the best or optimal. The terms "coupled" and "connected", along with derivatives thereof may have been used. It should be understood that these terms may have been used to indicate that two elements cooperate or interact with each other regardless whether they are in direct physical or electrical contact, or they are not in direct contact with each other.
Although specific aspects have been illustrated and described herein, it will be appreciated that a variety of alternate and/or equivalent implementations may be substituted for the specific aspects shown and described without departing from the scope of the present disclosure. This application is intended to cover any adaptations or variations of the specific aspects discussed herein.
Although the elements in the following claims are recited in a particular sequence with corresponding labeling, unless the claim recitations otherwise imply a particular sequence for implementing some or all of those elements, those elements are not necessarily intended to be limited to being implemented in that particular sequence.
Many alternatives, modifications, and variations will be apparent to those skilled in the art in light of the above teachings. Of course, those skilled in the art readily recognize that there are numerous applications of the invention beyond those described herein. While the present invention has been described with reference to one or more particular embodiments, those skilled in the art recognize that many changes may be made thereto without departing from the scope of the present invention. It is therefore to be understood that within the scope of the appended claims the invention may be practiced otherwise than as specifically described herein.

**Claims**

1. An apparatus (100; 200) for processing 3D video data using inter-view prediction, the apparatus (100; 200) comprising a processor (101; 201) configured to:

   obtain a reconstructed depth information value of a reconstructed depth information video coding block associated to a reference depth information map of a reference view, wherein reconstructed depth information values of the reference depth information map are quantized according to a predetermined reference quantization comprising a predetermined number of quantization levels, each quantization level representing a different depth information value;
   obtain a reduced range information associated to the reference depth information map, wherein the reduced range information defines a reduced range of depth quantization levels available for the inter-view prediction within the range of quantization levels defined by the predetermined reference quantization;
   process a reconstructed depth information value of the reconstructed depth information video coding block associated to the reference view using a depth information value adaptation function to obtain an adapted reconstructed depth information value of the reconstructed depth information video coding block, wherein the adapted reconstructed depth information value corresponds to the reconstructed depth information value of the reconstructed depth information video coding block or a further processed version thereof, and wherein the depth information value adaptation function is based on the reduced range information and is configured to increase a number of quantization levels available to represent adapted reconstructed depth information values associated to reconstructed depth information values within the reduced range;
   apply a spatial filter to the adapted reconstructed depth information value of the reconstructed depth information video coding block associated to the reference view to obtain a spatially filtered adapted reconstructed depth information value of the reconstructed depth information video coding block associated to the reference view, wherein the spatial filter is an edge preserving smoothing filter; and
   generate a predicted texture video coding block of a dependent texture frame associated with a dependent view on the basis of the spatially filtered adapted reconstructed depth information value of the reconstructed depth information video coding block associated to the reference view and a corresponding reconstructed texture video coding block of a reference texture frame associated to the reference view; and
   generate a predicted depth information video coding block of a dependent depth information map associated with the dependent view on the basis of the adapted reconstructed depth information value of the reconstructed depth information video coding block associated to the reference view.

2. The apparatus (100; 200) according to claim 1, wherein the depth information value adaptation function is implemented such that a number of quantization levels available for representing adapted reconstructed depth information values is predetermined, for example equal to a number of quantization levels of the pre-determined reference quantization, or larger than the number of quantization levels of the pre-determined reference quantization.

3. The apparatus (100; 200) according to any one of claims 1 to 2, wherein the depth information value adaptation function is implemented such that a number of quantization levels QL of depth information values is predetermined and the depth information value adaptation function corresponds to the following equation:

$$D_{adapZ} = \frac{D - l_l}{l_u - l_l} \cdot (QL - 1),$$

   wherein D denotes the reconstructed depth information value of the reconstructed depth information video coding block associated to the reference view, $D_{adapZ}$ denotes the adapted reconstructed depth information value, $l_l$ denotes a lower depth information value representing a lower limit of the reduced range, $l_u$ denotes an upper depth information value representing an upper limit of the reduced range.

4. The apparatus (100; 200) according to any one of claims 1 to 3, wherein the processor (101; 201) is further configured to:
   determine the reduced range information, e.g. a lower depth information value representing a lower limit of the reduced range and an upper depth information value representing an upper limit of the reduced range, associated to the reference view by performing an outlier detection among occurring reconstructed depth information values occurring in a reconstructed version of the depth information map associated to the reference view.

5. The apparatus (100; 200) according to claim 4, wherein the processor (101; 201) is configured to determine the reduced range information such that the lower depth information value is larger than a minimum depth information value occurring in the reconstructed version of the depth information map and/or the upper depth information value is smaller than a maximum depth information value occurring in the reconstructed version of the depth information map.

6. The apparatus (100; 200) according to claim 4 or 5, wherein the processor (101; 201) is further configured to determine a histogram about an occurrence of reconstructed depth information values in the reconstructed version of the depth information map associated to the reference view to perform the outlier detection.

7. The apparatus (100; 200) according to any one of the preceding claims, wherein the processor (101; 201) is further configured to:

obtain a nearest depth value corresponding to a minimum depth information value and a farthest depth value corresponding to a maximum depth information value according to the predetermined reference quantization;
wherein the depth information value adaptation function is further based on the nearest depth value and the farthest depth value.

8. The apparatus (100; 200) according to any one of the preceding claims, wherein the apparatus (100; 200) for processing 3D video data using inter-view prediction is an apparatus (200) for decoding 3D video data using inter-view prediction.

9. The apparatus (200) according to claim 8, wherein the processor (201) is configured to obtain encoding side information, wherein the encoding side information comprises information about at least one parameter associated with the processing of the reconstructed depth information value of the reconstructed depth information video coding block associated to the reference view using the depth information value adaptation function to obtain the adapted reconstructed depth information value of the reconstructed depth information video coding block, in particular a lower depth information value representing a lower limit of the reduced range and an upper depth information value representing an upper limit of the reduced range.

10. The apparatus (100; 200) according to any one of claims 1 to 7, wherein the apparatus (100; 200) for processing 3D video data using inter-view prediction is an apparatus (100) for encoding 3D video data using inter-view prediction.

11. The apparatus (100) of claim 10, wherein the processor (101) is further configured to generate encoding side information, wherein the encoding side information comprises information about at least one parameter associated with the processing of the reconstructed depth information value of the reconstructed depth information video coding block associated to the reference view using the depth information value adaptation function to obtain the adapted reconstructed depth information value of the reconstructed depth information video coding block, in particular a lower depth information value representing a lower limit of the reduced range and an upper depth information value representing an upper limit of the reduced range.

12. A method (300) for processing 3D video data using inter-view prediction, the method (300) comprising:

obtaining (301) a reconstructed depth information value of a reconstructed depth information video coding block associated to a reference depth information map of a reference view, wherein reconstructed depth information values of the reference depth information map are quantized according to a predetermined reference quantization comprising a predetermined number of quantization levels, each quantization level representing a different depth information value;
obtaining (303) a reduced range information associated to the reference depth information map, wherein the reduced range information defines a reduced range of depth quantization levels available for the inter-view prediction within the range of quantization levels defined by the predetermined reference quantization;
processing (305) a reconstructed depth information value of the reconstructed depth information video coding block associated to the reference view using a depth information value adaptation function to obtain an adapted reconstructed depth information value of the reconstructed depth information video coding block, wherein the adapted reconstructed depth information value corresponds to the reconstructed depth information value of the reconstructed depth information video coding block or a further processed version thereof, and wherein the depth information value adaptation function is based on the reduced range information and is configured to increase a number of quantization levels available to represent adapted reconstructed depth information values associated to reconstructed depth information values within the reduced range;
applying a spatial filter to the adapted reconstructed depth information value of the reconstructed depth information video coding block associated to the reference view to obtain a spatially filtered adapted reconstructed depth information value of the reconstructed depth information video coding block associated to the reference view, wherein the spatial filter is an edge preserving smoothing filter; and

generating (307a) a predicted texture video coding block of a dependent texture frame associated with a dependent view on the basis of the spatially filtered adapted reconstructed depth information value of the reconstructed depth information video coding block associated to the reference view and a corresponding reconstructed texture video coding block of a reference texture frame associated to the reference view; and

generating (307b) a predicted depth information video coding block of a dependent depth information map associated with the dependent view on the basis of the adapted reconstructed depth information value of the reconstructed depth information video coding block associated to the reference view.

13. A computer program comprising program code for performing the method (300) of claim 12, when executed on a computer.

**Patentansprüche**

1. Vorrichtung (100; 200) zum Verarbeiten von 3D-Video-Daten unter Verwendung von Inter-View-Vorhersage, wobei die Vorrichtung (100; 200) einen Prozessor (101; 201) umfasst, der dazu konfiguriert ist:

einen rekonstruierten Tiefeninformationswert eines rekonstruierten Tiefeninformationsvideocodierblocks in Verbindung mit einer Referenz-Tiefeninformationskarte eines Referenz-Views einzuholen, wobei die rekonstruierten Tiefeninformationswerte der Referenz-Tiefeninformationskarte gemäß einer vorbestimmten Referenz-Quantisierung, die eine vorbestimmte Anzahl von Quantisierungsebenen umfasst, quantisiert sind, wobei jede Quantisierungsebene einen unterschiedlichen Tiefeninformationswert darstellt;

eine Information über den reduzierten Bereich in Verbindung mit der Referenz-Tiefeninformationskarte einzuholen, wobei die Information über den reduzierten Bereich einen reduzierten Bereich von Tiefenquantisierungsebenen definiert, die für die Inter-View-Vorhersage innerhalb des Bereichs von Quantisierungsebenen, die durch die vorbestimmte Referenz-Quantisierung definiert werden, verfügbar sind;

einen rekonstruierten Tiefeninformationswert des rekonstruierten Tiefeninformationsvideocodierblocks in Verwendung mit dem Referenz-View unter Verwendung einer Tiefeninformationswertanpassungsfunktion zu verarbeiten, um einen angepassten rekonstruierten Tiefeninformationswert des rekonstruierten Tiefeninformationsvideocodierblocks zu erhalten, wobei der angepasste rekonstruierte Tiefeninformationswert dem rekonstruierten Tiefeninformationswert des rekonstruierten Tiefeninformationsvideocodierblocks oder einer weiter verarbeiteten Version davon entspricht, und wobei die Tiefeninformationswertanpassungsfunktion auf der Information über den reduzierten Bereich basiert und dazu konfiguriert ist, eine Anzahl von Quantisierungsebenen zu erhöhen, die verfügbar sind, um angepasste rekonstruierte Tiefeninformationswerte in Verbindung mit rekonstruierten Tiefeninformationswerten innerhalb des reduzierten Bereichs darzustellen;

einen Raumfilter auf den angepassten rekonstruierten Tiefeninformationswert des rekonstruierten Tiefeninformationsvideocodierblocks in Verbindung mit dem Referenz-View anzuwenden, um einen räumlich gefilterten angepassten rekonstruierten Tiefeninformationswert des rekonstruierten Tiefeninformationsvideocodierblocks in Verbindung mit dem Referenz-View zu erhalten, wobei der Raumfilter ein kantenerhaltender Glättungsfilter ist; und

einen vorhergesagten Texturvideocodierblock eines abhängigen Texturbilds in Verbindung mit einem abhängigen View auf der Basis des räumlich gefilterten angepassten rekonstruierten Tiefeninformationswerts des rekonstruierten Tiefeninformationsvideocodierblocks in Verbindung mit dem Referenz-View und eines entsprechenden rekonstruierten Texturvideocodierblocks eines Referenz-Texturbilds in Verbindung mit dem Referenz-View zu erzeugen; und

einen vorhergesagten Tiefeninformationsvideocodierblock einer abhängigen Tiefeninformationskarte in Verbindung mit dem abhängigen View auf der Basis des angepassten rekonstruierten Tiefeninformationswerts des rekonstruierten Tiefeninformationsvideocodierblocks in Verbindung mit dem Referenz-View zu erzeugen.

2. Vorrichtung (100; 200) nach Anspruch 1, wobei die Tiefeninformationswertanpassungsfunktion derart implementiert wird, dass eine Anzahl von Quantisierungsebenen, die zur Darstellung angepasster rekonstruierter Tiefeninformationswerte verfügbar ist, vorbestimmt wird, zum Beispiel gleich einer Anzahl von Quantisierungsebenen der vorbestimmten Referenz-Quantisierung, oder größer als die Anzahl von Quantisierungsebenen der vorbestimmten Referenz-Quantisierung.

3. Vorrichtung (100; 200) nach einem der Ansprüche 1 bis 2, wobei die Tiefeninformationswertanpassungsfunktion derart implementiert wird, dass eine Anzahl von Quantisierungsebenen (quantization levels) QL von Tiefeninformationswerten vorbestimmt wird, und wobei die Tiefeninformationswertanpassungsfunktion der folgenden Gleichung entspricht:

$$D_{adapZ} = \frac{D - l_l}{l_u - l_l} \cdot (QL - 1),$$

wobei D den rekonstruierten Tiefeninformationswert des rekonstruierten Tiefeninformationsvideocodierblocks in Verbindung mit dem Referenz-View bezeichnet, $D_{adapZ}$ den angepassten rekonstruierten Tiefeninformationswert bezeichnet, $l_l$ einen unteren Tiefeninformationswert bezeichnet, der eine untere Grenze des reduzierten Bereichs darstellt, $l_u$ einen oberen Tiefeninformationswert bezeichnet, der eine obere Grenze des reduzierten Bereichs darstellt.

4. Vorrichtung (100; 200) nach einem der Ansprüche 1 bis 3, wobei der Prozessor (101; 201) ferner dazu konfiguriert ist:
die Information über den reduzierten Bereich zu ermitteln, z. B. einen unteren Tiefeninformationswert, der eine untere Grenze des reduzierten Bereichs darstellt, und einen oberen Tiefeninformationswert, der eine obere Grenze des reduzierten Bereichs darstellt, in Verbindung mit dem Referenz-View durch Durchführen einer Ausreißererkennung unter auftretenden rekonstruierten Tiefeninformationswerten, die in einer rekonstruierten Version der Tiefeninformationskarte in Verbindung mit dem Referenz-View auftreten.

5. Vorrichtung (100; 200) nach Anspruch 4, wobei der Prozessor (101; 201) dazu konfiguriert ist, die Information über den reduzierten Bereich so zu ermitteln, dass der untere Tiefeninformationswert größer ist als ein minimaler Tiefeninformationswert, der in der rekonstruierten Version der Tiefeninformationskarte auftritt, und/oder der obere Tiefeninformationswert kleiner ist als ein maximaler Tiefeninformationswert, der in der rekonstruierten Version der Tiefeninformationskarte auftritt.

6. Vorrichtung (100; 200) nach Anspruch 4 oder 5, wobei der Prozessor (101; 201) dazu konfiguriert ist, ein Histogramm über ein Auftreten rekonstruierter Tiefeninformationswerte in der rekonstruierten Version der Tiefeninformationskarte in Verbindung mit dem Referenz-View zu ermitteln, um die Ausreißererkennung durchzuführen.

7. Vorrichtung (100; 200) nach einem der vorstehenden Ansprüche, wobei der Prozessor (101; 201) ferner dazu konfiguriert ist:

einen nächsten Tiefenwert, der einem minimalen Tiefeninformationswert entspricht, und einen entferntesten Tiefenwertwert, der einem maximalen Tiefeninformationswert entspricht, gemäß der vorbestimmten Referenz-Quantisierung einzuholen;
wobei die Tiefeninformationswertanpassungsfunktion ferner auf dem nächsten Tiefenwert und dem entferntesten Tiefenwert basiert.

8. Vorrichtung (100; 200) nach einem der vorstehenden Ansprüche, wobei die Vorrichtung (100; 200) zum Verarbeiten von 3D-Video-Daten unter Verwendung von Inter-View-Vorhersage eine Vorrichtung (200) zum Decodieren von 3D-Video-Daten unter Verwendung von Inter-View-Vorhersage ist.

9. Vorrichtung (200) nach Anspruch 8, wobei der Prozessor (201) dazu konfiguriert ist, eine Codiernebeninformation einzuholen, wobei die Codiernebeninformation eine Information über mindestens einen Parameter in Verbindung mit dem Verarbeiten des rekonstruierten Tiefeninformationswerts des rekonstruierten Tiefeninformationsvideocodierblocks in Verbindung mit dem Referenz-View unter Verwendung der Tiefeninformationswertanpassungsfunktion, um den angepassten rekonstruierten Tiefeninformationswert des rekonstruierten Tiefeninformationsvideocodierblocks zu erhalten, umfasst, insbesondere einen unteren Tiefeninformationswert, der eine untere Grenze des reduzierten Bereichs darstellt, und einen oberen Tiefeninformationswert, der eine obere Grenze des reduzierten Bereichs darstellt.

10. Vorrichtung (100; 200) nach einem der Ansprüche 1 bis 7, wobei die Vorrichtung (100; 200) zum Verarbeiten von 3D-Video-Daten unter Verwendung von Inter-View-Vorhersage eine Vorrichtung (100) zum Codieren von 3D-Video-Daten unter Verwendung von Inter-View-Vorhersage ist.

11. Vorrichtung (100) nach Anspruch 10, wobei der Prozessor (101) ferner dazu konfiguriert ist, eine Codiernebeninformation zu erzeugen, wobei die Codiernebeninformation eine Information über mindestens einen Parameter in Verbindung mit dem Verarbeiten des rekonstruierten Tiefeninformationswerts des rekonstruierten Tiefeninformationsvideocodierblocks in Verbindung mit dem Referenz-View unter Verwendung der Tiefeninformationswertanpassungsfunktion, um den angepassten rekonstruierten Tiefeninformationswert des rekonstruierten Tiefeninformationsvideocodierblocks zu erhalten, umfasst, insbesondere einen unteren Tiefeninformationswert, der eine untere Grenze des reduzierten Bereichs darstellt, und einen oberen Tiefeninformationswert, der eine obere Grenze des reduzierten Bereichs darstellt.

12. Verfahren (300) zum Verarbeiten von 3D-Video-Daten unter Verwendung von Inter-View-Vorhersage, wobei das Verfahren (300) Folgendes umfasst:

Einholen (301) eines rekonstruierten Tiefeninformationswerts eines rekonstruierten Tiefeninformationsvideocodierblocks in Verbindung mit einer Referenz-Tiefeninformationskarte eines Referenz-Views, wobei rekonstruierte Tiefeninformationswerte der Referenz-Tiefeninformationskarte gemäß einer vorbestimmten Referenz-Quantisierung quantisiert sind, die eine vorbestimmte Anzahl von Quantisierungsebenen umfasst, wobei jede Quantisierungsebene einen unterschiedlichen Tiefeninformationswert darstellt;

Einholen (303) einer Information über den reduzierten Bereich in Verbindung mit der Referenz-Tiefeninformationskarte, wobei die Information über den reduzierten Bereich einen reduzierten Bereich von Tiefenquantisierungsebenen definiert, die für die Inter-View-Vorhersage innerhalb des Bereichs von Quantisierungsebenen, die durch die vorbestimmte Referenz-Quantisierung definiert werden, verfügbar sind;

Verarbeiten (305) eines rekonstruierten Tiefeninformationswerts des rekonstruierten Tiefeninformationsvideocodierblocks in Verwendung mit dem Referenz-View unter Verwendung einer Tiefeninformationswertanpassungsfunktion, um einen angepassten rekonstruierten Tiefeninformationswert des rekonstruierten Tiefeninformationsvideocodierblocks zu erhalten, wobei der angepasste rekonstruierte Tiefeninformationswert dem rekonstruierten Tiefeninformationswert des rekonstruierten Tiefeninformationsvideocodierblocks oder einer weiter verarbeiteten Version davon entspricht, und wobei die Tiefeninformationswertanpassungsfunktion auf der Information über den reduzierten Bereich basiert und dazu konfiguriert ist, eine Anzahl von Quantisierungsebenen zu erhöhen, die verfügbar sind, um angepasste rekonstruierte Tiefeninformationwerte in Verbindung mit rekonstruierten Tiefeninformationswerten innerhalb des reduzierten Bereichs darzustellen;

Anwenden eines Raumfilters auf den angepassten rekonstruierten Tiefeninformationswert des rekonstruierten Tiefeninformationsvideocodierblocks in Verbindung mit dem Referenz-View, um einen räumlich gefilterten angepassten rekonstruierten Tiefeninformationswert des rekonstruierten Tiefeninformationsvideocodierblocks in Verbindung mit dem Referenz-View zu erhalten, wobei der Raumfilter ein kantenerhaltender Glättungsfilter ist; und

Erzeugen (307a) eines vorhergesagten Texturvideocodierblocks eines abhängigen Texturbilds in Verbindung mit einem abhängigen View auf der Basis des räumlich gefilterten angepassten rekonstruierten Tiefeninformationswerts des rekonstruierten Tiefeninformationsvideocodierblocks in Verbindung mit dem Referenz-View und eines entsprechenden rekonstruierten Texturvideocodierblocks eines Referenz-Texturbilds in Verbindung mit dem Referenz-View; und

Erzeugen (307b) eines vorhergesagten Tiefeninformationsvideocodierblocks einer abhängigen Tiefeninformationskarte in Verbindung mit dem abhängigen View auf der Basis des angepassten rekonstruierten Tiefeninformationswerts des rekonstruierten Tiefeninformationsvideocodierblocks in Verbindung mit dem Referenz-View.

13. Computerprogramm, umfassend einen Programmcode zum Durchführen des Verfahrens (300) nach Anspruch 12, wenn es auf einem Computer ausgeführt wird.

**Revendications**

1. Appareil (100 ; 200) pour traiter des données vidéo en 3D à l'aide d'une prédiction intervues, l'appareil (100 ; 200) comprenant un processeur (101 ; 201) conçu pour :

obtenir une valeur d'information de profondeur reconstruite d'un bloc de codage vidéo d'information de profondeur reconstruite associé à une carte d'information de profondeur de référence d'une vue de référence, dans lequel des valeurs d'information de profondeur reconstruite de la carte d'information de profondeur de référence sont quantifiées selon une quantification de référence prédéterminée comprenant un nombre prédéterminé de niveaux de quantification, chaque niveau de quantification représentant une valeur d'information de profondeur différente ;
obtenir une information de plage réduite associée à la carte d'information de profondeur de référence, dans lequel l'information de plage réduite définit une plage réduite de niveaux de quantification de profondeur disponibles pour la prédiction intervues au sein de la plage de niveaux de quantification définie par la quantification de référence prédéterminée ;
traiter une valeur d'information de profondeur reconstruite du bloc de codage vidéo d'information de profondeur reconstruite associé à la vue de référence à l'aide d'une fonction d'adaptation de valeur d'information de profondeur pour obtenir une valeur d'information de profondeur reconstruite adaptée du bloc de codage vidéo d'information de profondeur reconstruite, dans lequel la valeur d'information de profondeur reconstruite adaptée correspond à la valeur d'information de profondeur reconstruite du bloc de codage vidéo d'information de profondeur reconstruite ou d'une version davantage traitée de celle-ci, et dans lequel la fonction d'adaptation de valeur d'information de profondeur est basée sur l'information de plage réduite et est conçue pour augmenter un nombre de niveaux de quantification disponibles pour représenter des valeurs d'information de profondeur reconstruite adaptées associées à des valeurs d'information de profondeur reconstruite au sein de la plage réduite ;

appliquer un filtre spatial à la valeur d'information de profondeur reconstruite adaptée du bloc de codage vidéo d'information de profondeur reconstruite associé à la vue de référence pour obtenir une valeur d'information de profondeur reconstruite adaptée filtrée spatialement du bloc de codage vidéo d'information de profondeur reconstruite associé de la vue de référence, dans lequel le filtre spatial est un filtre de lissage préservant les contours ; et

générer un bloc de codage vidéo de texture prédite d'une trame de texture dépendante associée à une vue dépendante sur la base de la valeur d'information de profondeur reconstruite adaptée filtrée spatialement du bloc de codage vidéo d'information de profondeur reconstruite associé à la vue de référence et d'un bloc de codage vidéo de texture reconstruite correspondant d'une trame de texture de référence associée à la vue de référence ; et

générer un bloc de codage vidéo d'information de profondeur prédite d'une carte d'information de profondeur dépendante associée à la vue dépendante sur la base de la valeur d'information de profondeur reconstruite adaptée du bloc de codage vidéo d'information de profondeur reconstruite associé à la vue de référence.

**2.** Appareil (100 ; 200) selon la revendication 1, dans lequel la fonction d'adaptation de valeur d'information de profondeur est mise en œuvre de sorte qu'un nombre de niveaux de quantification disponibles pour représenter des valeurs d'information de profondeur reconstruite adaptées soit prédéterminé, par exemple, égal à un nombre de niveaux de quantification de la quantification de référence prédéterminée, ou plus que le nombre de niveaux de quantification de la quantification de référence prédéterminée.

**3.** Appareil (100 ; 200) selon l'une quelconque des revendications 1 et 2, dans lequel la fonction d'adaptation de valeur d'information de profondeur est mise en œuvre de sorte qu'un nombre de niveaux de quantification QL de valeurs d'information de profondeur soit prédéterminé et que la fonction d'adaptation de valeur d'information de profondeur corresponde à l'équation suivante :

$$D_{adapZ} = \frac{D - l_l}{l_u - l_l} \cdot (QL - 1),$$

où D désigne la valeur d'information de profondeur reconstruite du bloc de codage vidéo d'information de profondeur reconstruite associé à la vue de référence, $D_{adapZ}$ désigne la valeur d'information de profondeur reconstruite adaptée, $l_l$ désigne une valeur d'information de profondeur inférieure représentant une limite inférieure de la plage réduite, $l_u$ désigne une valeur d'information de profondeur supérieure représentant une limite supérieure de la plage réduite.

**4.** Appareil (100 ; 200) selon l'une quelconque des revendications 1 à 3, dans lequel le processeur (101 ; 201) est en outre conçu pour :
déterminer l'information de plage réduite, par exemple une valeur d'information de profondeur inférieure représentant une limite inférieure de la plage réduite et une valeur d'information de profondeur supérieure représentant une limite supérieure de la plage réduite, associée à la vue de référence par la réalisation d'une détection de données aberrantes parmi des valeurs d'information de profondeur reconstruite de survenue survenant dans une version reconstruite de la carte d'information de profondeur associée à la vue de référence.

**5.** Appareil (100 ; 200) selon la revendication 4, dans lequel le processeur (101 ; 201) est conçu pour déterminer l'information de plage réduite de sorte que la valeur d'information de profondeur inférieure soit plus grande qu'une valeur d'information de profondeur minimale survenant dans la version reconstruite de la carte d'information de profondeur et/ou que la valeur d'information de profondeur supérieure soit plus petite qu'une valeur d'information de profondeur maximale survenant dans la version reconstruite de la carte d'information de profondeur.

**6.** Appareil (100 ; 200) selon la revendication 4 ou 5, dans lequel le processeur (101 ; 201) est en outre conçu pour déterminer un histogramme concernant une survenue de valeurs d'information de profondeur reconstruite dans la version reconstruite de la carte d'information de profondeur associée à la vue de référence pour réaliser la détection de données aberrantes.

7. Appareil (100 ; 200) selon l'une quelconque des revendications précédentes, dans lequel le processeur (101 ; 201) est en outre conçu pour :

    obtenir une valeur de profondeur la plus proche correspondant à une valeur d'information de profondeur minimale et une valeur de profondeur la plus éloignée correspondant à une valeur d'information de profondeur maximale selon la quantification de référence prédéterminée ;
    dans lequel la fonction d'adaptation de valeur d'information de profondeur est en outre basée sur la valeur de profondeur la plus proche et la valeur de profondeur la plus éloignée.

8. Appareil (100 ; 200) selon l'une quelconque des revendications précédentes, dans lequel l'appareil (100 ; 200) pour traiter des données vidéo en 3D à l'aide d'une prédiction intervues est un appareil (200) destiné au décodage de données vidéo en 3D à l'aide d'une prédiction intervues.

9. Appareil (200) selon la revendication 8, dans lequel le processeur (201) est conçu pour obtenir une information côté codage, dans lequel l'information côté codage comprend une information concernant au moins un paramètre associé au traitement de la valeur d'information de profondeur reconstruite du bloc de codage vidéo d'information de profondeur reconstruite associé à la vue de référence à l'aide de la fonction d'adaptation de valeur d'information de profondeur pour obtenir la valeur d'information de profondeur reconstruite adaptée du bloc de codage vidéo d'information de profondeur reconstruite, en particulier une valeur d'information de profondeur inférieure représentant une limite inférieure de la plage réduite et une valeur d'information de profondeur supérieure représentant une limite supérieure de la plage réduite.

10. Appareil (100 ; 200) selon l'une quelconque des revendications 1 à 7, dans lequel l'appareil (100 ; 200) pour traiter des données vidéo en 3D à l'aide d'une prédiction intervues est un appareil (100) destiné au codage de données vidéo en 3D à l'aide d'une prédiction intervues.

11. Appareil (100) selon la revendication 10, dans lequel le processeur (101) est en outre conçu pour générer une information côté codage, dans lequel l'information côté codage comprend une information concernant au moins un paramètre associé au traitement de la valeur d'information de profondeur reconstruite du bloc de codage vidéo d'information de profondeur reconstruite associé à la vue de référence à l'aide de la fonction d'adaptation de valeur d'information de profondeur pour obtenir la valeur d'information de profondeur reconstruite adaptée du bloc de codage vidéo d'information de profondeur reconstruite, en particulier une valeur d'information de profondeur inférieure représentant une limite inférieure de la plage réduite et une valeur d'information de profondeur supérieure représentant une limite supérieure de la plage réduite.

12. Procédé (300) pour traiter des données vidéo en 3D à l'aide d'une prédiction intervues, le procédé (300) comprenant :

    l'obtention (301) d'une valeur d'information de profondeur reconstruite d'un bloc de codage vidéo d'information de profondeur reconstruite associé à une carte d'information de profondeur de référence d'une vue de référence, dans lequel des valeurs d'information de profondeur reconstruite de la carte d'information de profondeur de référence sont quantifiées selon une quantification de référence prédéterminée comprenant un nombre prédéterminé de niveaux de quantification, chaque niveau de quantification représentant une valeur d'information de profondeur différente ;
    l'obtention (303) d'une information de plage réduite associée à la carte d'information de profondeur de référence, dans lequel l'information de plage réduite définit une plage réduite de niveaux de quantification de profondeur disponibles pour la prédiction intervues au sein de la plage de niveaux de quantification définie par la quantification de référence prédéterminée ;
    le traitement (305) d'une valeur d'information de profondeur reconstruite du bloc de codage vidéo d'information de profondeur reconstruite associé à la vue de référence à l'aide d'une fonction d'adaptation de valeur d'information de profondeur pour obtenir une valeur d'information de profondeur reconstruite adaptée du bloc de codage vidéo d'information de profondeur reconstruite, dans lequel la valeur d'information de profondeur reconstruite adaptée correspond à la valeur d'information de profondeur reconstruite du bloc de codage vidéo d'information de profondeur reconstruite ou d'une version davantage traitée de celle-ci, et dans lequel la fonction d'adaptation de valeur d'information de profondeur est basée sur l'information de plage réduite et est conçue pour augmenter un nombre de niveaux de quantification disponibles pour représenter des valeurs d'information de profondeur reconstruite adaptées associées à des valeurs d'information de profondeur reconstruite au sein de la plage réduite ;

l'application d'un filtre spatial à la valeur d'information de profondeur reconstruite adaptée du bloc de codage vidéo d'information de profondeur reconstruite associé à la vue de référence pour obtenir une valeur d'information de profondeur reconstruite adaptée filtrée spatialement du bloc de codage vidéo d'information de profondeur reconstruite associé à la vue de référence, dans lequel le filtre spatial est un filtre de lissage préservant les contours ; et

la génération (307a) d'un bloc de codage vidéo de texture prédite d'une trame de texture dépendante associée à une vue dépendante sur la base de la valeur d'information de profondeur reconstruite adaptée filtrée spatialement du bloc de codage vidéo d'information de profondeur reconstruite associé à la vue de référence et d'un bloc de codage vidéo de texture reconstruite correspondant à une trame de texture de référence associée à la vue de référence ; et

la génération (307b) d'un bloc de codage vidéo d'information de profondeur prédite d'une carte d'information de profondeur dépendante associée à la vue dépendante sur la base de la valeur d'information de profondeur reconstruite adaptée du bloc de codage vidéo d'information de profondeur reconstruite associé à la vue de référence.

13. Programme d'ordinateur comprenant un code de programme destiné à réaliser le procédé (300) selon la revendication 12, lorsqu'il est exécuté sur un ordinateur.

Fig. 1

Fig. 2

300

**301**

Obtaining a reconstructed depth information value of a reconstructed depth information block associated to a reference depth information map of a reference view, wherein reconstructed depth information values of the reference depth information map are quantized according to a predetermined reference quantization comprising a predetermined number of quantization levels, each quantization level representing a different depth information value

**303**

Obtaining a reduced range information associated to the reference depth information map, wherein the reduced range information defines a reduced range of depth quantization levels available for the inter-view prediction within the range of quantization levels defined by the predetermined reference quantization

**305**

Processing a reconstructed distance information value of the reconstructed depth information block associated to the reference view using a distance information value adaptation function to obtain an adapted reconstructed distance information value of the reconstructed depth information block, wherein the reconstructed distance information value corresponds to the reconstructed depth information value of the reconstructed depth information block or a further processed version thereof, and wherein the distance information value adaptation function is based on the reduced range information

**307a**

Generating a predicted texture video coding block of a dependent texture frame associated with a dependent view on the basis of the adapted reconstructed distance information value of the reconstructed depth information video coding block associated to the reference view and a corresponding reconstructed texture video coding block of a reference texture frame associated to the reference view

**307b**

Generating a predicted depth information video coding block of a dependent depth information map associated with the dependent view on the basis of the adapted reconstructed distance information value of the reconstructed depth information video coding block associated to the reference view

Fig. 3

Fig. 4

Fig. 5

Histogram of guided filtered adaptive Z-Buffer depth map

Fig. 6

Fig. 7

|  | $w_M$ | $\omega$ | $\epsilon$ | adapZbuf | Poznan | Blocks |
|---|---|---|---|---|---|---|
|  |  |  |  |  | Rate | PSNR |
| texture | 9 | 31 | 1 | no | -10.9 % | 0.44 dB |
|  | 9 | 31 | 1 | yes | -13.6 % | 0.57 dB |
| depth | 9 | 31 | 1 | no | -2.2 % | 0.09 dB |
|  | 9 | 31 | 1 | yes | -2.2 % | 0.09 dB |

Table 1: BD-statistics

Fig. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7558432 B2

- WO 2014139566 A1

**Non-patent literature cited in the description**

- Adaptive sharpening of depth maps for 3D-TV. **D.V.S.X. DE SILVA et al.** Electronics Letters. The Institution of Engineering and Technology, 11 November 2010, vol. 46, 1546-1548

- **KAIMING HE ; JIAN SUN ; XIAOOU TANG.** Guided Image Filtering'', in Pattern Analysis and Machine Intelligence. *IEEE Trans.,* June 2013, vol. 35.6, 1397-1409